# FASCICULE DE BREVET EUROPEEN

(11) **EP 0 612 650 B1**
(45) Date de publication et mention de la délivrance du brevet: **09.07.1997**
(21) Numéro de dépôt: 94400390.4
(22) Date de dépôt: 23.02.1994
(51) Int. Cl.: B62D 1/19

(54) **Arbre de direction télescopique par exemple pour véhicule automobile**
Teleskopische Lenksäule z.B. für Kraftfahrzeug
Telescopic steering column e.g. for automotive vehicle

(30) Priorité: 24.02.1993 FR 9302120
(43) Date de publication de la demande: 31.08.1994
(73) Titulaire: ECIA - EQUIPEMENTS ET COMPOSANTS POUR L'INDUSTRIE AUTOMOBILE, F-25400 Audincourt (FR)
(72) Inventeur: Courvoisier, Patrick, F-25600 Vieux-Charmont (FR); Pourchot, Michel, F-25400 Audincourt (FR)
(74) Mandataire: Habasque, Etienne Joel Jean-François

(56) Documents cités:
- EP-A- 0 220 986
- US-A- 4 619 548

## Description

La présente invention concerne un arbre de direction télescopique par exemple pour véhicule automobile.

On connait déjà dans l'état de la technique, un certain nombre d'arbres de direction télescopiques qui comportent deux portions d'arbre tubulaires et cylindriques, et déplaçables à coulissement l'une dans l'autre, dont l'une comporte des cannelures axiales externes adaptées pour coopérer avec des cannelures internes complémentaires de l'autre portion d'arbre.

Ces arbres de direction télescopiques sont par exemple utilisés dans des ensembles de colonne de direction dans lesquels la position du volant est réglable au moins axialement par un utilisateur.

Des moyens élastiques de rattrapage des jeux radiaux d'assemblage entre ces deux portions d'arbre peuvent également être interposés entre celles-ci.

On connaît dans l'état de la technique différents modes de réalisation de ces moyens de rattrapage des jeux.

C'est ainsi par exemple que ces moyens peuvent comporter des bagues par exemple en matière plastique reliées à l'une des portions d'arbre et adaptées pour coopérer avec l'autre portion d'arbre pour annuler les jeux radiaux d'assemblage entre ces portions d'arbre.

Ces moyens de rattrapage des jeux peuvent également être constitués par exemple par une lame élastique disposée entre les deux portions d'arbre.

Cependant, ces dispositifs présentent un certain nombre d'inconvénients en raison du nombre de pièces utilisées, ce qui entraîne une augmentation des coûts de fabrication de ces arbres.

On connaît également du document EP-A-0 220 986, un arbre de direction conforme au préambule de la revendication 1 et dans lequel des languettes sont découpées à l'extrémité de la portion d'arbre correspondante.

Cependant, des essais ont montré que cette structure présente un certain nombre d'inconvénients, notamment au niveau de sa tenue dans le temps, en raison de la réduction consécutive de la résistance mécanique de cette extrémité de la portion d'arbre, alors que celle-ci est soumise à des sollicitations importantes.

Le but de l'invention est donc de résoudre ces problèmes en proposant un arbre de direction télescopique qui soit simple, fiable, dans lequel les jeux radiaux d'assemblage soient supprimés et qui soit extrêmement simple à réaliser.

A cet effet, l'invention a pour objet un arbre de direction télescopique, par exemple pour véhicule automobile, du type comportant deux portions d'arbre tubulaires et cylindriques et déplaçables à coulissement l'une dans l'autre, dont l'une comporte des cannelures axiales externes adaptées pour coopérer avec des cannelures internes complémentaires de l'autre portion d'arbre et des moyens élastiques de rattrapage des jeux radiaux d'assemblage entre ces deux portions d'arbre, comprenant au moins une languette découpée dans au moins l'une des portions d'arbre et déformée radialement en direction de l'autre portion d'arbre pour solliciter les portions d'arbre l'une contre l'autre, caractérisé en ce que ladite au moins une languette est découpée dans la longueur de ladite au moins une portion d'arbre, dans une partie intermédiaire située entre les extrémités de celle-ci.

L'invention sera mieux comprise à l'aide de la description qui va suivre, donnée uniquement à titre d'exemple et faite en se référant aux dessins annexés, sur lesquels :

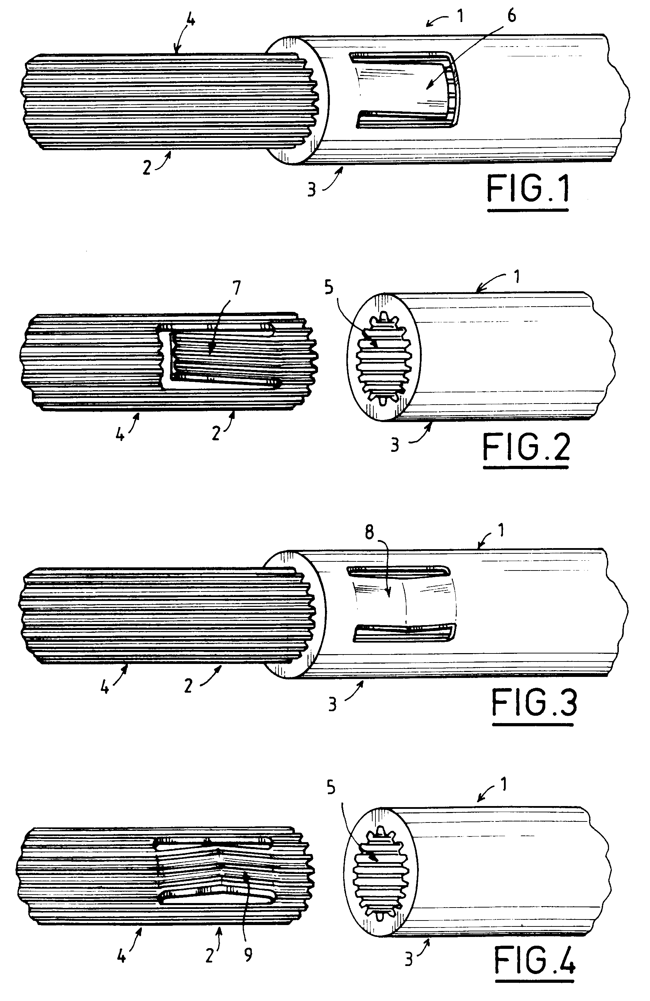

- les Fig.1 à 4 représentent quatre modes de réalisation différents d'un arbre de direction télescopique selon l'invention.

Ainsi qu'on peut le voir sur ces figures, un arbre de direction télescopique désigné par la référence générale 1, par exemple pour véhicule automobile, comporte deux portions d'arbre tubulaires et cylindriques et déplaçables à coulissement l'une dans l'autre.

Ces portions d'arbre sont désignées par les références 2 et 3 sur ces figures.

La portion d'arbre interne 2 comporte des cannelures axiales externes désignées par la référence générale 4, adaptées pour coopérer avec des cannelures internes complémentaires 5 de l'autre portion d'arbre 3 pour assurer une liaison en rotation de ces deux portions d'arbre tout en autorisant un déplacement à coulissement de celles-ci l'une dans l'autre.

Des moyens élastiques de rattrapage des jeux radiaux d'assemblage entre ces deux portions d'arbre sont également prévus.

Différents modes de réalisation de ces moyens élastiques de rattrapage des jeux d'assemblage peuvent être envisagés.

Sur la Fig.1, ces moyens élastiques de rattrapage des jeux sont formés par au moins une languette désignée par la référence générale 6, découpée dans la portion d'arbre externe 3 et déformée radialement en direction de l'autre portion d'arbre, pour assurer une sollicitation de ces deux portions d'arbre l'une contre l'autre.

On conçoit en effet que cette languette découpée dans la portion d'arbre externe et déformée radialement vers l'intérieur, présente une certaine élasticité qui dépend du matériau utilisé pour la réalisation de cette portion d'arbre, de l'épaisseur de celle-ci, de la dimension et de la forme de cette languette et du degré de déformation radiale de celle-ci, ces différents critères pouvant facilement être contrôlés pour obtenir une sollicitation déterminée de l'une des portions d'arbre contre l'autre.

Bien entendu, plusieurs languettes de ce type peuvent être ménagées le long de cette portion d'arbre.

Sur la Fig.2, on a représenté un autre mode de réalisation de ces moyens de rattrapage des jeux, dans lequel ces moyens comprennent toujours une languette, mais qui cette fois, est découpée dans la portion d'arbre interne 2 et est déformée radialement vers l'extérieur pour obtenir l'effet de sollicitation de ces deux portions d'arbre l'une contre l'autre et le rattrapage des jeux radiaux d'assemblage.

Cette languette est désignée par la référence 7 sur cette figure 2.

Bien entendu également, plusieurs languettes peuvent être réparties le long de cette portion d'arbre interne.

Il va de soi également qu'au moins une languette de ce type peut être prévue sur chaque portion d'arbre.

Différentes formes de languette peuvent être envisagées.

Sur les Fig.3 et 4, on a représenté d'autres modes de réalisation de cette languette.

Ces languettes sont désignées par les références 8 et 9 respectivement sur les Fig.3 et 4 et sont également découpées dans la portion d'arbre externe 3 et/ou interne 2 et déformées radialement en direction de l'autre portion d'arbre respectivement pour solliciter ces portions d'arbre en appui l'une contre l'autre.

Dans ces modes de réalisation, ces languettes sont formées entre deux traits de coupe parallèles des portions d'arbre externe et interne.

Bien entendu, d'autres formes de découpe peuvent être envisagées.

On conçoit alors que l'arbre de direction selon l'invention présente un certain nombre d'avantages par rapport aux arbres connus dans l'état de la technique dans la mesure où les moyens élastiques de rattrapage des jeux radiaux d'assemblage entre les deux portions d'arbre sont venus de matière avec l'une ou chaque portion d'arbre et sont obtenus par découpe et déformation d'une portion de celles-ci.

Ceci simplifie énormément la fabrication de ces arbres et le contrôle de qualité de ceux-ci en facilitant l'automatisation des opérations de fabrication, de montage et de contrôle de la qualité de ces arbres.

En effet, la découpe et la déformation de la ou de chaque languette peuvent être réalisées par exemple par un outil de frappe à froid de manière classique.

## Revendications

1. Arbre de direction télescopique, par exemple pour véhicule automobile, du type comportant deux portions d'arbre (2,3) tubulaires et cylindriques et déplaçables à coulissement l'une dans l'autre, dont l'une (2) comporte des cannelures axiales externes (4) adaptées pour coopérer avec des cannelures internes complémentaires (5) de l'autre portion d'arbre (3) et des moyens élastiques de rattrapage des jeux radiaux d'assemblage entre ces deux portions d'arbre, comprenant au moins une languette (6;7;8;9) découpée dans au moins l'une des portions d'arbre et déformée radialement en direction de l'autre portion d'arbre pour solliciter les portions d'arbre l'une contre l'autre, caractérisé en ce que ladite au moins une languette est découpée dans la longueur de ladite au moins une portion d'arbre, dans une partie intermédiaire située entre les extrémités de celle-ci.

2. Arbre de direction selon la revendication 1, caractérisé en ce que les moyens de rattrapage des jeux comprennent plusieurs languettes réparties sur la ou chaque portion d'arbre.

## Claims

1. Telescopic steering shaft, for a motor vehicle, for example, of the type comprising two tubular, cylindrical shaft portions (2, 3) which are movable by sliding one inside the other, one (2) comprising outer axial grooves (4) adapted to co-operate with complementary inner grooves (5) on the other shaft portion (3) and resilient means for taking up the radial assembly play between these two shaft portions, comprising at least one tongue (6; 7; 8; 9) cut out from at least one of the shaft portions and bent radially towards the other shaft portion so as to bias the shaft portions towards each other, characterised in that said at least one tongue is cut out within the length of said at least one shaft portion, in an intermediate part located between the ends of said portion.

2. Steering shaft according to claim 1, characterised in that the play takeup means comprise a plurality of tongues arranged on the or each shaft portion.

## Patentansprüche

1. Teleskopische Lenksäule, zum Beispiel für ein Kraftfahrzeug, umfassend zwei röhrenförmige und zylindrische Säulenabschnitte (2, 3), die ineinander gleitend verschiebbar sind, von denen der eine (2) eine axiale äußere Riffelung (4) aufweist, die dafür ausgelegt ist, mit einer komplementären inneren Riffelung (5) des anderen Säulenabschnitts (3) zusammenzuwirken, und elastische Mittel zur Beseitigung des radialen Montagespiels zwischen diesen beiden Säulenabschnitten, welche mindestens eine Feder (6; 7; 8; 9) umfassen, die aus mindestens einem der Säulenabschnitte ausgeschnitten und radial in Richtung des anderen Säulenabschnitts verformt ist, um die Säulenabschnitte gegenseitig zu belasten, dadurch gekennzeichnet, daß die mindestens eine Feder aus der Länge des mindestens einen Säulenabschnitts in einem zwischen den Enden desselben gelegenen Mittelteil ausgeschnitten ist.

2. Lenksäule nach Anspruch 1, dadurch gekennzeichnet, daß die Mittel zur Spielbeseitigung mehrere Federn umfassen, die auf dem oder jedem Säulenabschnitt verteilt sind.
